# EUROPEAN PATENT SPECIFICATION

(11) **EP 1 741 332 B1**
(45) Date of publication and mention of the grant of the patent: **13.01.2010**
(21) Application number: 06076378.6
(22) Date of filing: 07.07.2006
(51) Int. Cl.: A01G 9/10, B65D 85/52

(54) **Tray with handle**
Schale mit Griff
Plateau avec poignée

(30) Priority: 07.07.2005 NL 1029460
(43) Date of publication of application: 10.01.2007
(73) Proprietor: Modiform B.V., 3831 KA Leusden (NL)
(72) Inventor: van Heugten, Petrus Johannes, 3791 PK Achterveld (NL)
(74) Representative: van Loon, C.J.J.

(56) References cited:
- AU-B2- 780 968
- BE-A3- 1 015 126
- US-A- 5 927 009
- US-A1- 2002 092 233

## Description

The invention relates to a tray with handle, suitable and intended for plants, seedlings and similar crop.

For growing, transporting and offering crop, use is made of trays with different receiving cavities. In the receiving cavities, a growth medium such as soil is provided, optionally in a plant pot, in which the crop is placed in the form of, for instance, seeds, seedlings or the like. The trays are then arranged on a cultivation bed and provided with water from above by means of a sprinkling installation. In that water, in addition, additives may be added, such as for instance fertilizers and chemicals.

In order to be able to move the trays easily, each tray is provided with at least one handle. The handle is typically formed from a strip, for instance manufactured from plasticized cardboard or plastic. The handle is provided with two opposite ends, each provided with a narrowed part which can be put through an opening in a connecting element of the tray. Here, a widening operatively extending below the connecting part provides engagement against the bottom side, upon taking up the tray, while the part of the handle extending above the connecting element is also wider. Thus, next to each narrowed part, a shoulder is provided, so that, in a position of rest, the handle rests by the shoulders mentioned on the connecting element around the respective opening. As a result of bending of the handle before inserting the handle into the openings, the respective ends are pressed apart by elastic stress, so that the narrowed parts are forced against longitudinal edge parts remote from each other of the respective openings.

Plant trays with handle are disclosed, for example, in US 5 927 009 A and AU 780 968 B2.

It has been found that, during the growing of crop in such trays, uneven growth occurs in different receiving cavities of a tray. This is undesired.

It is an object of the invention to offer a tray with handle where, during use, during the growing of crop, a more even growth of the crop in the different receiving cavities of the respective tray. To this end, a tray with handle according to the invention is characterized by the measures according to claim 1.

With a tray with handle according to the invention, means are provided for discharging water from the handle in a direction away from the receiving cavities. This ensures that a more uniform watering of the different receiving cavities is obtained.

With trays according to the prior art as described in the introduction, it has been found that, during watering, water falls on the handle and, as a result of the bent shape thereof, runs off in the direction of the ends inserted into the openings. From the handle, the water then flows away over the connecting element into receiving cavities next to the openings. As a result, uneven growth occurs in the different receiving cavities of a tray, which is undesired. Because, with a tray with handle according to the invention, water is prevented from flowing from the handle into a number of the receiving cavities, an uneven distribution of water over a tray is at least largely prevented.

It has surprisingly been found that, with an adjustment according to the invention, with a same amount of water, an even growth of the crop can be obtained, while the tray with handle can be used in the same manner as with the known trays with handle. Adjustments in, for instance, cultivation beds, sprinkling installations, computerization systems, lighting and the like are not necessary for this.

In a first advantageous embodiment, a tray with handle according to the invention is characterized in that, between a part of the handle extending into an opening and an adjacent longitudinal edge of the opening, on the side of the handle remote from the other opening, a passage opening is provided through which water flowing from the handle can flow away, away from the receiving cavities.

It has been found that, with the known tray, the respective part of the handle has a rectangular cross section, while the opening is likewise rectangular. Here, the width of the respective part extending into the opening is approximately equal to the width of the opening, measured in the same direction. Thus, as a result of the elastic stress in the handle, the outside of the respective part of the handle will be pressed against the longitudinal edge of the opening and prevent passage of water. According to the invention, this is advantageously prevented by profiling the part of the longitudinal edge of the opening towards which the part of the handle extending into the opening is pressed such that the respective handle part can abut this non-contiguously. This means that a passage opening is always maintained. Here, the surface of the passage opening is chosen such that water can pass simply and preferably virtually or completely without any pressure, for instance larger than 4 mm², more in particular between approximately 5 and 6 mm², which dimensions should by no means be construed to be limitative. To this end, the respective longitudinal edge may, for instance, have a bent design or be provided with a narrowing.

In a second advantageous embodiment, around the respective openings, a recessed part is provided in which the handle rests in a condition of rest, so that water flowing from the handle is collected in this recessed part, screened from the receiving cavities. Here, drainage means are provided connecting the recessed part mentioned with the environment, so that water can flow away from the recessed part mentioned, away from the receiving cavities. Preferably, to this end, the openings are adjusted as described hereinabove, so that water can flow away through the passage openings mentioned.

By, in addition, designing the transition between the part of the handle extending through the opening, the narrowed part, and the part of the handle contiguous thereto above the connecting element, the wider support part of the handle, such that the free end parts provided as shoulders of the support part mentioned do not rest flatly on the connecting element but are shaped such that only a part thereof rests on the connecting element at a distance from the narrowed part mentioned, the water is discharged still more simply.

In a further advantageous embodiment, an apparatus according to the invention is further characterized in that the openings are substantially oval, with a width which is approximately equal to the width of the narrowed part of the handle, while the length is such that the end of the handle can be put through the opening and can then be rotated into a support position.

A tray according to the invention is preferably manufactured from plastic, in particular by vacuum formation or injection molding or a similar technique for die-molding products.

If, around the openings mentioned, a recess is provided, next to the respective opening, a drainage may further be provided, for instance in the shape of a further opening or a discharge channel to the perimeter of the tray.

The invention further relates to a method for watering growth medium in trays, characterized by the measures according to claim 12.

With such a method, the advantage is achieved that, without expensive or labor-intensive measures, the cultivation of crop in trays can be simplified and improved. In particular, this largely prevents uneven growth of the crop from occurring in the different receiving cavities of the tray as a result of water flowing from a handle into some receiving cavities, as occurs with trays according to the prior art.

By way of explanation of the invention, embodiments of a tray and method according to the invention will be elucidated in more detail with reference to the drawing, in which:
Fig. 1 shows, in perspective view, two trays with handle according to the invention placed next to each other;
Fig. 2 shows, in top plan view, a tray, with removed handle, according to the invention;
Fig. 3 shows, in a partly cross-sectional front view along the line III ― III in Fig. 1, two trays with handle according to Fig. 2;
Fig. 4 shows, in perspective top plan view, a part of a tray according to the invention, with handle, slightly enlarged;
Fig. 5 shows, in cross-sectional front view and top plan view, an opening of a tray according to the invention; and
Figs. 6A, B and C show, in top plan view, alternative embodiments of a part of a tray with handle according to the invention.

In this description, same or corresponding parts have same or corresponding reference numerals. These embodiments are only shown by way of illustration and should by no means be construed to be limitative. In particular, also combinations with parts thereof are understood to fall within the invention.

The embodiments shown of the trays according to the invention are shown and described as vacuum-formed trays with rows of receiving cavities next to one another. However, other molding techniques such as injection molding, compression molding and the like may also be used and the receiving cavities may be arranged in different manners.

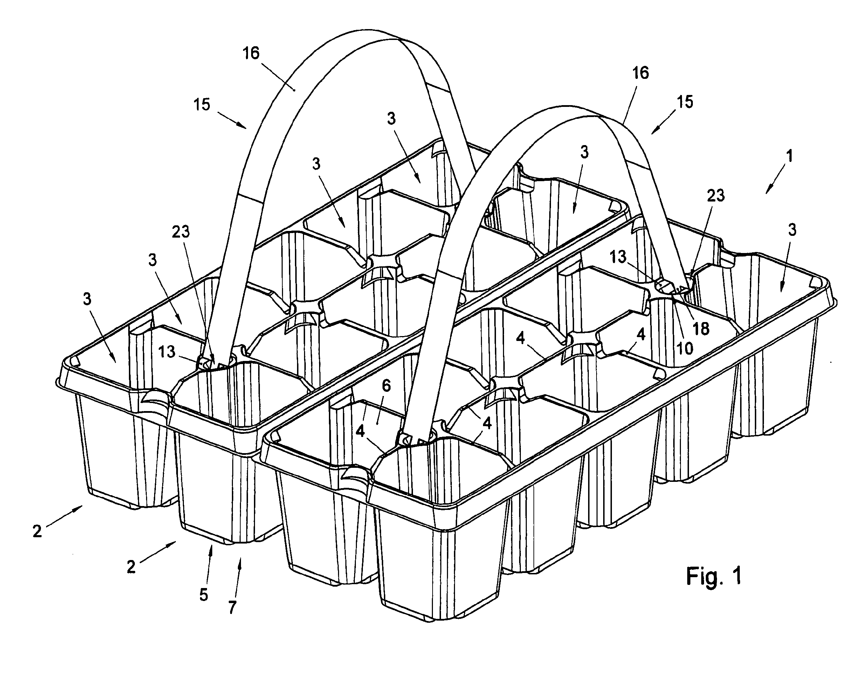

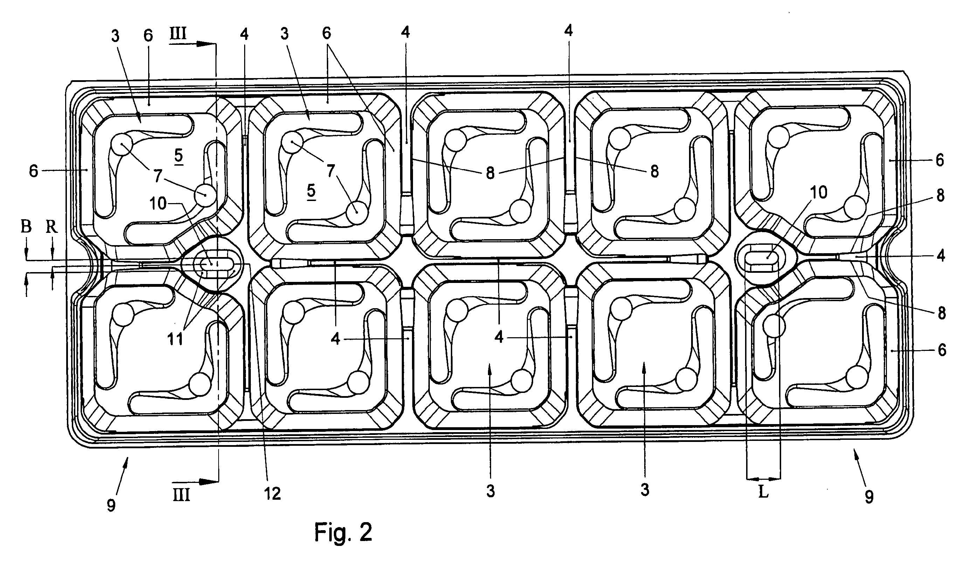

Fig. 1 shows, in perspective top plan view, two trays 1 according to the invention, with two rows 2 of receiving cavities 3. The rows 2 are parallel to one another and are interconnected by connecting elements 4, in particular a strip formed integrally with the receiving cavities 3. In the example shown, each row 2 has five receiving cavities 3, each with a substantially rectangular, in particular square cross section and a longitudinal wall 6 slightly tapering in the direction of a bottom 5, as clearly appears from Fig. 2. In the bottom 5, openings 7 are provided through which water can flow away. The connecting elements 4 connect the upper longitudinal edges 8 of receiving cavities 3 located next to one another, both in each row 2 and between the rows 2.

With the embodiment shown in Figs. 1 and 2, an opening 10 is provided between four receiving cavities 3 near each end 9 of the two rows 2 in the connecting element 4. In the embodiment shown, the opening is substantially rectangular with rounded ends 11. At the end mentioned, the longitudinal edge 12 has a radius R, which is approximately equal to half of the width B, measured approximately at right angles to the longitudinal direction T of the rows 2. The length L of the opening 10 extends approximately parallel to the rows 2 and is, in this embodiment, greater than the width B. The edge 10A of the opening 10 tapers slightly, so that the radius R_{M} is slightly larger at the top. Around the opening 10, a recess or recessed part 13 is provided as a depression, such that an upstanding edge 14 is obtained between a higher part of the connecting element 4 and the recessed part 13, as particularly appears clearly from Figs. 1, 3, 4 and 5.

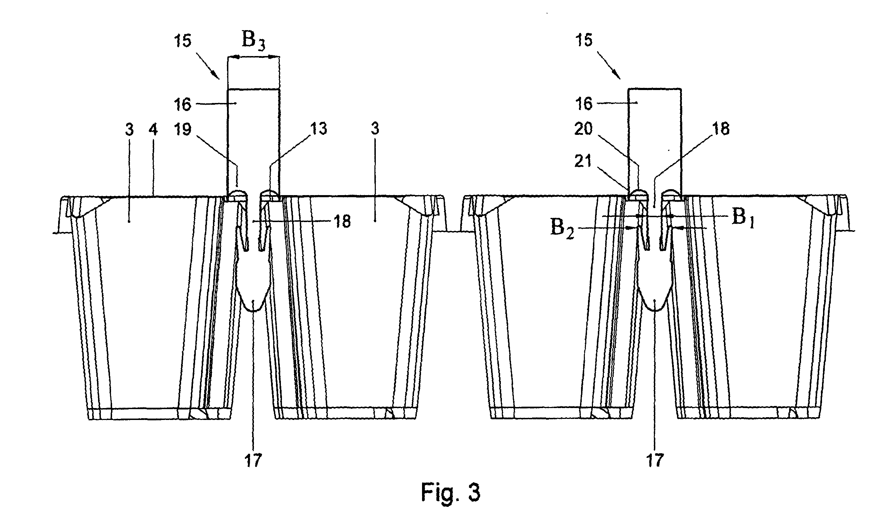

A handle 15 is formed from a strip of relatively flexible material, like plastic or optionally plasticized cardboard or similar material. Other materials may also be suitable. The handle comprises a center part 16 to be referred to as handle part, an end 17 to be referred to as end part on both sides and a narrowed part 18 between above-mentioned handle part 16 and each end part 17 (Fig. 3). As particularly appears from Fig. 3, the narrowed part 18 preferably has a width B₁ which is approximately equal to the width B of the opening 10. The end parts 17 and the handle part 16 have, at least near each narrowed part 18, a width B₂ and B₃, respectively, which is greater than the width B mentioned. Here, the width B₂ is preferably smaller than the length L of the opening 10. In addition, the end part 17 has a slightly pointed shape, in the direction away from the narrowed part 18, such that this part can simply be pressed through the opening 10. Here, the end part 17 is rotated such that the width B₂ thereof extends approximately parallel to the longitudinal direction L of the opening 10. After the end part 17 has passed the opening 10, it is rotated through approximately 90 degrees, so that the width direction B₂ again extends approximately at right angles to the longitudinal direction L and the end part 17 can only be withdrawn from the opening 10 after rotation back through approximately 90 degrees.

At the transition of the handle part 16 and the narrowed part 18, on both sides of the narrowed part, a shoulder 19 is provided which can rest on the connecting element 4 if the handle is not pulled upwards. In the exemplary embodiment shown, each shoulder 19 has a bent end 20, so that only a point 21 thereof rests on the recessed part 13 at a distance from the narrowed part 18. The width B₃ of the handle part 16 is chosen such that it will always rest in the recess 13.

The tray 1 can be taken up and moved with the aid of the handle 15, for instance for placing it on a cultivation surface, under a sprinkling installation and/or lighting. In the receiving cavities 3, growth medium is provided, for instance soil or wool such as glass wool or mineral wool. In this medium, crop is planted or sown or provided otherwise, for instance in the form of seeds, seedlings or in another suitable manner. Then, water is given, for instance with the aid of the sprinkling installation, until a desired development of the crop has been reached, after which the trays 1 with crop (not shown) are taken up and discharged with the aid of the handles 15.

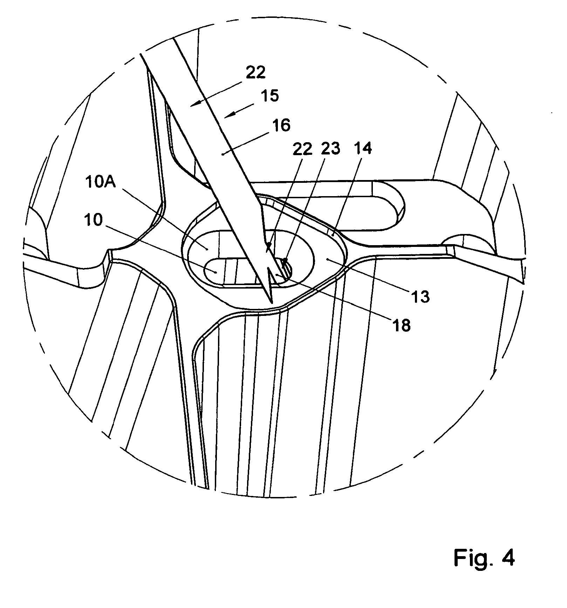

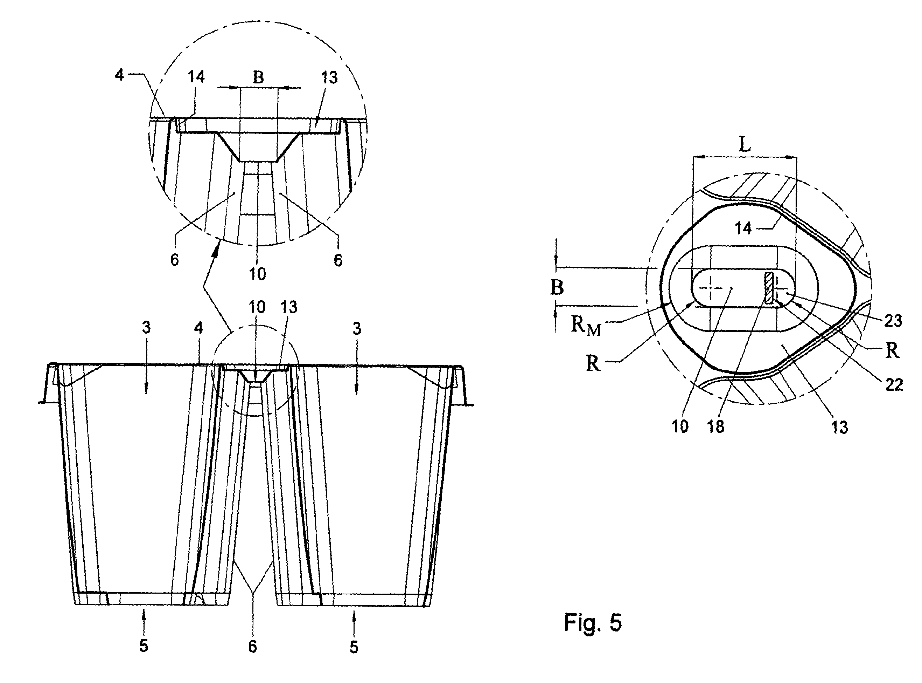

As is particularly also clear from Figs. 4 and 5, between the surface 22 of the handle 15 facing the bent longitudinal edge 12 and this longitudinal edge 12, on both sides of the handle 15, a passage opening 23 is kept clear through which water running down along the handle 15 during sprinkling, at least during watering of crop, can be discharged, away from the receiving cavities 3. The surface of this passage opening 23 is preferably so large that water does not still remain in the recessed part as a result of surface tension, at least not to such a height that it can still flow over its edges into the adjacent receiving cavities. If the passage opening(s) are sufficiently large to let the water flowing from the handle pass directly, a recessed part can be omitted. Optionally, instead of or next to the passage openings, a trough may be provided from the recessed part to a longitudinal edge of the tray, away from the receiving cavities, for discharging water flowing from the handle.

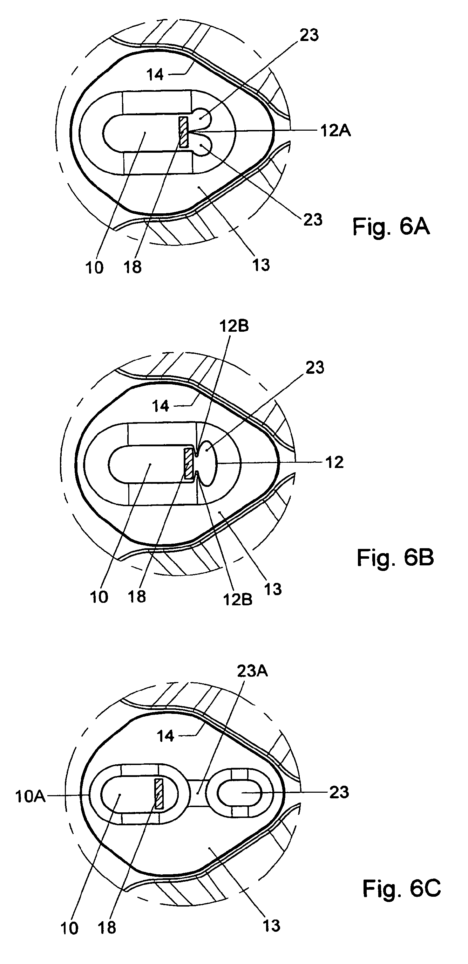

Figs. 6A and B show two examples of alternative shapes of an opening 10, in which a narrowed part 18 of the handle 15 in the opening 10 is shown in cross section. In the embodiment of Fig. 6A, the longitudinal edge 12 has been bent back into the opening 10 such that a point 12A is formed against which the narrowed part 18 runs up. Thus, on both sides of the point, two passage openings 23 are provided. In the embodiment of Fig. 6B, two protuberances 12B are provided, which extend so far into the opening that the narrowed part 18 cannot pass them. The distance between the protuberances 12B can be chosen such that the end 17 can move between them in the above-mentioned rotated position, for placing the handle 15. Here, between the protuberances 12B and the longitudinal edge 12, a passage opening 23 is kept clear with a relatively large surface.

Fig. 6C shows a further alternative, where a passage opening 23 is provided at a distance from the opening 10, within a recessed part. A channel 23A may be provided between the longitudinal edge 12 and the passage opening 23, for still further improving the discharge of water from the handle to the passage opening.

By way of illustration, a number of dimensions are given, which should by no means be construed to be limitative. In the embodiment shown, the recessed part 13 has a depth of about 1 to 2 mm with respect to the top surface of the connecting element, while the opening 10 has a wall 10A slightly offset downwards of about 3 mm. The total length of the opening 10 is, for instance, between 10 and 12 mm, with a width of about 4 mm, so that the radius of curvature is about 2 mm. The recessed part has a surface which is, for instance, two or three times as large as the surface of the opening 10. These dimensions may of course also be chosen differently, for instance depending on the shape and dimensions of the tray and the handle.

In general, it can be said that, with a tray and method according to the invention, during use, in particular during watering, water flowing from the handle is guided away from the receiving cavities of the tray, in contrast with known trays where at least a part of that water flows into the receiving cavities and leads to uneven growth.

The invention is by no means limited to the embodiments as shown and described herein. Many variations thereof are possible within the framework of the invention defined by the claims. Thus, an opening like in the prior art can be used, on condition that a drainage is provided via a recessed part into a drainage opening or the longitudinal edge of the tray for water flowing from the handle. A tray according to the invention may have multiple rows and/or columns of receiving cavities, with multiple handles, while, in addition, the handles may be positioned and attached differently. Also, different arrangements may be chosen for the receiving cavities and different materials may be used. In particular, also combinations of parts of the embodiments shown are understood to fall within the framework of the invention.

## Claims

1. A tray (1) with handle (15); provided with a number of receiving cavities (3) for plant pots and/or growth medium, interconnected by at least one connecting element (4) near an upper side of the receiving cavities, wherein, in said at least one connecting element, at least two openings (10) located at a distance from one another are provided and, into said two openings, ends of the handle are placed, which ends extend through the openings and are pressed apart in a position of rest of the handle, such that said ends are forced to edge parts remote from one another of the openings, wherein, between the part of a respective end of the handle, extending into or through an opening and an adjacent edge part of the respective opening, which edge part is located on the side of the respective part of the handle remote from the other of said two openings, a passage opening (23) is provided for letting water pass and/or a part of said connecting element around each of said openings is slightly recessed, such that a part of the handle extending above the connecting element abuts the connecting element within said recessed part when the handle is in a position of rest, wherein drainage means are provided for said recessed part, away from the receiving cavities.

2. A tray with handle according to claim 1, wherein, of said openings (10), at least the edge part next to which said passage opening (23) is provided is bent and said part of the handle extending into the opening is less bent and preferably flat, such that at least a part of the said part of the handle extending through the opening is kept at a distance from said edge part.

3. A tray with handle according to claim 1 or 2, wherein, of said openings (10), at least the edge part next to which said passage opening (23) is provided is provided with a narrowing, which has a width which is smaller than the width of said part of the handle extending into the opening, such that at least a part of the said part of the handle extending through the opening is kept at a distance from said edge part.

4. A tray with handle according to any one of the preceding claims, wherein the drainage means for said recessed part are at least partly formed by said openings (10).

5. A tray with handle according to any one of the preceding claims, wherein, on two sides of each part of the handle extending into or through an opening (10), the handle is wider than said part, such that the tray can be taken up by the handle, while the handle can rest on the connecting part.

6. A tray with handle according to any one of the preceding claims, wherein the said openings (10) are substantially oval.

7. A tray with handle according to any one of the preceding claims, wherein the said openings (10) have a width which is approximately equal to a width of the part of a respective end of the handle extending into or through an opening, which width is smaller than the width of a part of the handle contiguous thereabove or therebelow.

8. A tray with handle according to any one of the preceding claims, wherein the handle is strip-shaped and is, in use, elastically bent, such that the handle extends arcuately between said openings (10), above the connecting part.

9. A tray with handle according to any one of the preceding claims, wherein the part of a respective end of the handle extending into or through an opening (10) is contiguous to a handle part above the connecting element (4), which part has a width which is greater than said part extending through the opening, wherein the said handle part is provided with a bent and/or inclined edge part on both sides of said part extending through the opening, such that the handle is supported on said connecting element in a position of rest, preferably within said recessed part, on relatively small contact surfaces at a distance from said part of the handle extending through the opening.

10. A tray for use in an assembly of a tray (1) and handle (15) according to any one of the preceding claims.

11. A tray according to claim 10, wherein, in a connecting element (4) between at least two rows of receiving cavities, at least two openings (10) are provided which have an at least partly bent profiling on longitudinal edge parts remote from one another.

12. A method for watering growth medium in trays, wherein trays with rows of plant cavities with plant medium therein are arranged, with elastically bent handles whose two ends are inserted into two openings located at a distance from each other, wherein water is sprayed over said trays and plant medium for watering the growth medium and plants, seedlings or similar crop present therein, wherein water falling on the handles and flowing along the handles to said connecting elements is discharged in a direction away from said plant cavities by collection thereof in recessed parts around said openings and/or discharge thereof through said openings.

## Patentansprüche

1. Schale (1) mit einem Tragegriff (15), welche eine Reihe von Aufnahmevertiefungen bzw. -mulden (3) für Pflanztöpfe und/oder Aufwuchsnährboden bereitstellt, die mit Hilfe mindestens eines Verbindungselements (4) nahe einer oberen Seite deriAufnahmevertiefungen miteinander verbunden sind, **dadurch gekennzeichnet, dass** in dem mindestens einen Verbindungselement mindestens zwei Öffnungen (10), welche in Abstand zueinander angeordnet sind, bereitgestellt sind, und dass in den beiden Öffnungen Enden des Tragegriffes angeordnet werden, wobei sich die Enden durch die Öffnungen erstrecken und in einer Ruhestellung des Tragegriffes auseinandergepresst werden, so dass die Enden zu Kantenabschnitten der Öffnungen gedrückt werden, welche entfernt voneinander liegen, **dadurch gekennzeichnet, dass** zwischen dem Abschnitt eines entsprechenden Endes des Tragegriffes, welcher sich in oder durch eine Öffnung erstreckt, und einem benachbarten Kantenabschnitt der jeweiligen Öffnung, welcher Kantenabschnitt an der Seite des entsprechenden Abschnitts des Tragegriffs entfernt von der anderen der zwei Öffnungen angeordnet ist, eine Durchgangsöffnung (23) bereitgestellt ist, um den Durchlauf von Wasser zuzulassen, und/oder ein Abschnitt des Verbindungselements um jede der Öffnungen herum geringfügig vertieft ist, so dass ein Abschnitt des Tragegriffes, welcher sich über dem Verbindungselement erstreckt, an dem Verbindungselement innerhalb des vertieften Abschnitts anliegt, wenn sich der Tragegriff in einer Ruhestellung befindet, wobei Drainage- bzw. Entwässerungsvorrichtungen für den vertieften Abschnitt weg bzw. entfernt von den Aufnahmevertiefungen bzw. -mulden bereitgestellt sind.

2. Schale mit Tragegriff gemäß Anspruch 1, **dadurch gekennzeichnet, dass** von den Öffnungen (10) zumindest der Kantenabschnitt, neben welchem die Durchgangsöffnung (23) bereitgestellt ist, gekrümmt ist, und dass der sich in die Öffnung erstreckende Abschnitt des Tragegriffs weniger gekrümmt ist und vorzugsweise flach ist, so dass zumindest ein Teil des sich durch die Öffnung erstreckenden Abschnitts des Tragegriffes in Abstand zu dem Kantenabschnitt gehalten wird.

3. Schale mit Tragegriff nach Anspruch 1 oder Anspruch 2, **dadurch gekennzeichnet, dass** von den Öffnungen (10), zumindest der Kantenabschnitt , neben welchem die Durchgangsöffnung (23) bereitgestellt ist, eine Verengung mit einer Breite aufweist, welche kleiner als die Breite des sich in die Öffnung erstreckenden Abschnitts des Tragegriffes ist, so dass zumindest ein Teil des sich durch die Öffnung erstreckenden Abschnitts des Tragegriffs in Abstand zu dem Kantenabschnitt gehalten wird.

4. Schale mit Tragegriff nach einem der vorhergehenden Ansprüche, **dadurch gekennzeichnet, dass** die Drainage- bzw. Entwässerungsvorrichtungen für den vertieften Abschnitt zumindest teilsweise von den Öffnungen (10) gebildet werden

5. Schale mit Tragegriff nach einem der vorhergehenden Ansprüche, **dadurch gekennzeichnet, dass** auf zwei Seiten eines jeden Abschnitts des Tragegriffes, welcher sich in oder durch eine Öffnung (10) erstreckt, der Tragegriff breiter als dieser Abschnitt ist, so dass die Schale mit Hilfe des Tragegriffes aufgegriffen werden kann, während sich der Tragegriff auf das Verbindungsteil stützen kann bzw. auf diesem ruhen kann.

6. Schale mit Tragegriff nach einem der vorhergehenden Ansprüche, **dadurch gekennzeichnet, dass** die Öffnungen (10) im Wesentlichen ovale Form aufweisen.

7. Schale mit Tragegriff nach einem der vorhergehenden Ansprüche, **dadurch gekennzeichnet, dass** die Öffnungen (10) eine Breite aufweisen, welche in etwa gleich einer Breite des Abschnitts eines entsprechenden Endes des Tragegriffes ist, welcher sich in oder durch eine Öffnung erstreckt, wobei diese Breite kleiner als die Breite eines Abschnitts des Tragegriffs ist, welcher darüber und darunter angrenzt.

8. Schale mit Tragegriff nach einem der vorhergehenden Ansprüche, **dadurch gekennzeichnet, dass** der Tragegriff streifenförmig ausgebildet ist und bei Gebrauch elastisch gekrümmt ist, so dass sich der Tragegriff bogenförmig zwischen den Öffnungen (10) über dem Verbindungsabschnitt erstreckt.

9. Schale mit Tragegriff nach einem der vorhergehenden Ansprüche, **dadurch gekennzeichnet, dass** der Abschnitt eines entsprechenden Endes des Tragegriffs, welcher sich in oder durch eine Öffnung (10) erstreckt, an einen Griffabschnitt über dem Verbindungselement (4) angrenzt, wobei der Abschnitt eine Breite aufweist, welche größer als die des sich durch die Öffnung erstreckenden Abschnitts ist, **dadurch gekennzeichnet, dass** der Tragegriffabschnitt einen gekrümmten und/oder schrägen Kantenabschnitt auf beiden Seiten des sich durch die Öffnung erstreckenden Abschnitts aufweist, so dass der Tragegriff auf dem Verbindungselement in einer Ruhestellung, vorzugsweise innerhalb des vertieften Abschnitts, auf relativ kleinen Kontaktflächen in Abstand zu dem sich durch die Öffnung erstreckenden Abschnitt des Tragegriffes gestützt wird.

10. Schale zur Verwendung in einem Aufbau aus einer Schale (1) und einem Tragegriff (15) nach einem der vorhergehenden Ansprüche.

11. Schale nach Anspruch 10, **dadurch gekennzeichnet, dass** in einem Verbindungselement (4) zwischen mindestens zwei Reihen von Aufnahmevertiefungen bzw. -mulden, mindestens zwei Öffnungen (10) bereitgestellt sind, welche eine zumindest teilweise gekrümmte Profilierung auf Längskantenabschnitten, welche voneinander entfernt sind, aufweisen.

12. Verfahren zur Bewässerung von Aufzuchtnährboden in Schalen, **dadurch gekennzeichnet, dass** Schalen mit Reihen von Pflanzvertiefungen mit Pfanzennährboden darin angeordnet sind, wobei die Schale elastisch gekrümmte Tragegriffe aufweist, deren beiden Enden in zwei voneinander beabstandet angeordnete Öffnungen eingeführt werden, wobei Wasser über die Schalen und den Pflanznährboden gesprüht wird, um den Aufzuchtnährboden sowie Pflanzen, Setzlinge oder ähnliche darin befindliche Kulturpfanzen zu bewässern, **dadurch gekennzeichnet, dass** Wasser, welches auf die Tragegriffe fällt und entlang der Tragegriffe zu den Verbindungselementen fließt, in eine Richtung weg von den Pflanzvertiefungen abgegeben wird, indem das Wasser in vertieften Abschnitten um die Öffnungen herum gesammelt wird und/oder indem das Wasser durch die Öffnungen abgelassen wird.

## Revendications

1. Plateau (1) avec poignée (15), muni d'une pluralité de cavités réceptrices (3) pour des pots de plantes et/ou un milieu de croissance, interconnectées par au moins un élément de connexion (4), à proximité d'une face supérieure des cavités réceptrices, dans lequel, dans ledit au moins un élément de connexion, sont prévues au moins deux ouvertures (10) situées à une distance l'une de l'autre et, dans lesdites deux ouvertures, sont placées des extrémités d'une poignée, lesdites extrémités s'étendant à travers les ouvertures et étant pressées à l'écart, en une position de repos de la poignée, de manière que lesdites extrémités soient forcées à aller vers des parties de bordure distantes les unes des autres des ouvertures, dans lequel, entre la partie d'une extrémité respective de la poignée, s'étendant dans ou à travers une ouverture, et une partie de bordure adjacente de l'ouverture respective, ladite partie de bordure étant située sur le côté de la partie respective de la poignée distante de l'autre desdites deux ouvertures, une ouverture de passage (23) est prévue pour laisser un passage d'eau et/ou une partie dudit élément de connexion, autour de chacune desdites ouvertures, est légèrement creusée, de manière qu'une partie de la poignée s'étendant au-dessus de l'élément de connexion vienne en butée avec l'élément de connexion à l'intérieur de ladite partie creusée, lorsque la poignée se trouve en une position de repos, dans lequel des moyens de drainage sont prévus pour ladite partie creusée, à distance des cavités réceptrices.

2. Plateau avec poignée selon la revendication 1, dans lequel, desdites ouvertures (10), au moins la partie de bordure à proximité de laquelle ladite ouverture de passage (23) est prévue est coudée, et ladite partie de la poignée s'étendant dans l'ouverture est moins coudée et, de préférence, plate, de manière qu'au moins une partie de ladite partie de la poignée s'étendant à travers l'ouverture soit maintenue à une certaine distance de ladite partie de bordure.

3. Plateau avec poignée selon la revendication 1 ou 2, dans lequel, desdites ouvertures (10), au moins la partie de bordure à proximité de laquelle ladite ouverture de passage (23) est prévue est munie d'un rétrécissement, présentant une largeur plus petite que la largeur de ladite partie de la poignée s'étendant dans l'ouverture, de manière qu'au moins une partie de ladite partie de la poignée s'étendant à travers l'ouverture soit maintenue à une certaine distance de ladite partie de bordure.

4. Plateau avec poignée selon l'une quelconque des revendications précédentes, dans lequel les moyens de drainage pour ladite partie creusée sont au moins partiellement formés par lesdites ouvertures (10).

5. Plateau avec poignée selon l'une quelconque des revendications précédentes, dans lequel, sur deux côtés de chaque partie de la poignée s'étendant dans ou à travers une ouverture (10), la poignée est plus large que ladite partie, de manière que le plateau puisse être prélevé par la poignée, tandis que la poignée peut reposer sur la partie de connexion.

6. Plateau avec poignée selon l'une quelconque des revendications précédentes, dans lequel lesdites ouvertures (10) sont sensiblement ovales.

7. Plateau avec poignée selon l'une quelconque des revendications précédentes, dans lequel lesdites ouvertures (10) ont une largeur à peu près égale à une largeur de la partie d'une extrémité respective de la poignée s'étendant dans ou à travers une ouverture, ladite largeur étant plus petite que la largeur d'une partie de la poignée contiguë, au-dessus ou au-dessous.

8. Plateau avec poignée selon l'une quelconque des revendications précédentes, dans lequel la poignée est en forme de bande et, en utilisation, est fléchie élastiquement, de manière que la poignée s'étende en forme d'arc, entre lesdites ouvertures (10), au-dessus de la partie de connexion.

9. Plateau avec poignée selon l'une quelconque des revendications précédentes, dans lequel la partie d'une extrémité respective de la poignée s'étendant dans ou à travers une ouverture (10) est contiguë à une partie de poignée située au-dessus de l'élément de connexion (4), ladite partie ayant une largeur plus grande que ladite partie s'étendant à travers l'ouverture, dans lequel ladite partie de poignée et munie d'une partie de bordure cintrée et/ou inclinée, sur les deux côtés de ladite s'étendant à travers l'ouverture, de manière que la poignée soit supportée sur ledit élément de connexion, en une position de repos, de préférence à l'intérieur de ladite partie creusée, sur des surfaces de contact relativement petites, à une certaine distance de ladite partie de la poignée s'étendant à travers l'ouverture.

10. Plateau pour utilisation dans un ensemble composé d'un plateau (1) et d'une poignée (15) selon l'une quelconque des revendications précédentes.

11. Plateau selon la revendication 10, dans lequel, dans un élément de connexion (4), entre au moins deux rangées de cavités réceptrices, sont prévues au moins deux ouvertures (10) ayant un profilage au moins partiellement cintré, sur des parties de bordure longitudinale distantes les unes des autres.

12. Procédé d'arrosage de milieu de croissance dans des plateaux, dans lequel sont agencés des plateaux avec des rangées de cavités à plantes contenant en leur sein du milieu de croissance, avec des poignées cintrées élastiquement, dont les deux extrémités sont insérées dans deux ouvertures situées à distance l'une de l'autre, dans lequel de l'eau est pulvérisée sur lesdits plateaux et milieu de croissance, pour arroser le milieu de croissance et les plantes, les semis ou une culture similaire y étant présents, dans lequel la chute d'eau sur les poignées et l'écoulement le long des poignées, vers lesdits éléments de connexion, est déchargée dans une direction s'écartant desdites cavités à plantes, par collecte de celle-ci dans des parties creusées se trouvant autour desdites ouvertures et/ou décharge de celle-ci à travers lesdites ouvertures.
